# EUROPEAN PATENT SPECIFICATION

(11) **EP 3 901 511 B1**
(45) Date of publication and mention of the grant of the patent: **20.07.2022**
(21) Application number: 20170534.0
(22) Date of filing: 21.04.2020
(51) Int. Cl.: F16N 13/20, F01M 1/16, F01C 21/10, F04C 14/22, F04C 2/344, F04C 15/00, F01M 1/02

(54) **PUMP FOR THE LUBRICANT OF AN INTERNAL COMBUSTION ENGINE**
PUMPE FÜR DAS SCHMIERMITTEL EINES VERBRENNUNGSMOTORS
POMPE À LUBRIFIANT D'UN MOTEUR À COMBUSTION INTERNE

(43) Date of publication of application: 27.10.2021
(73) Proprietor: FCA Italy S.p.A., 10135 Torino (IT)
(72) Inventor: GENTILE, Michele, 10135 Torino (IT)
(74) Representative: Notaro, Giancarlo

(56) References cited:
- DE-A1-102017 004 248
- JP-A- S6 085 283
- US-A- 5 090 881
- US-A- 6 126 420
- US-A1- 2010 296 956

## Description

### Field of the invention

The present invention relates in general to pumps for the lubricating circuit of an internal combustion engine, of the type comprising a pump body, defining a cavity opening on one face of the pump body, a lid secured to said face of the pump body, for closing said cavity, a rotor, rotatably mounted within the cavity of the pump body and a stator ring surrounding the rotor, which is positioned within said cavity against a bottom wall of said cavity and held in this position by said **lid**. Although the present invention is of general application, one of its embodiments which is particularly advantageous has been developed with reference to a positive displacement vane pump with variable displacement, of the type in which the rotor carries a series of radially slidable vanes and the above mentioned stator ring is constituted by a control ring arranged eccentrically with respect to the rotor and defining a wall against which the outer ends of the vanes carried by the rotor slide, said control ring being adjustable in position in a plane orthogonal to the axis of the rotor to vary the displacement of the pump and as a consequence of the pressure and flow of the supplied fluid.

The invention is however applicable to any other type of positive displacement pump, and in particular also to gear pumps, such as for example the Gerotor pumps.

### Prior art

Positive displacement pumps of the above indicated type are old and well known. The principle of operation of a positive displacement pump is based on the variation of volume of spaces defined between fixed elements and rotating elements of the pump, for example, in the case of a vane pump, on the variation of volume of sectors defined between adjacent vanes, and between the inner rotor and the control ring. In order to obtain a proper operation of the pump, it is necessary that the **sealing** against hydraulic leakages is ensured for each sector. In this respect, an instability of position of the rotor ring (for example **a**n axial movement and/or a rotation around a diametrical axis) involves an increase of fluid leakages, and in some cases also the risk that the pumping mechanism is totally by-passed, due to a direct communication, inside of the pump, between the low pressure chamber and the high pressure chamber. These events may cause an undesired and relevant reduction of the fluid supplied flow at the outlet of the pump.

Studies and the tests conducted by the Applicant have further shown that, in addition to the above-mentioned drawbacks, an instability of position of the components of the pump is also a source of noise during the operation of the engine to which the pump is associated, particularly in a hot operating condition of the engine.

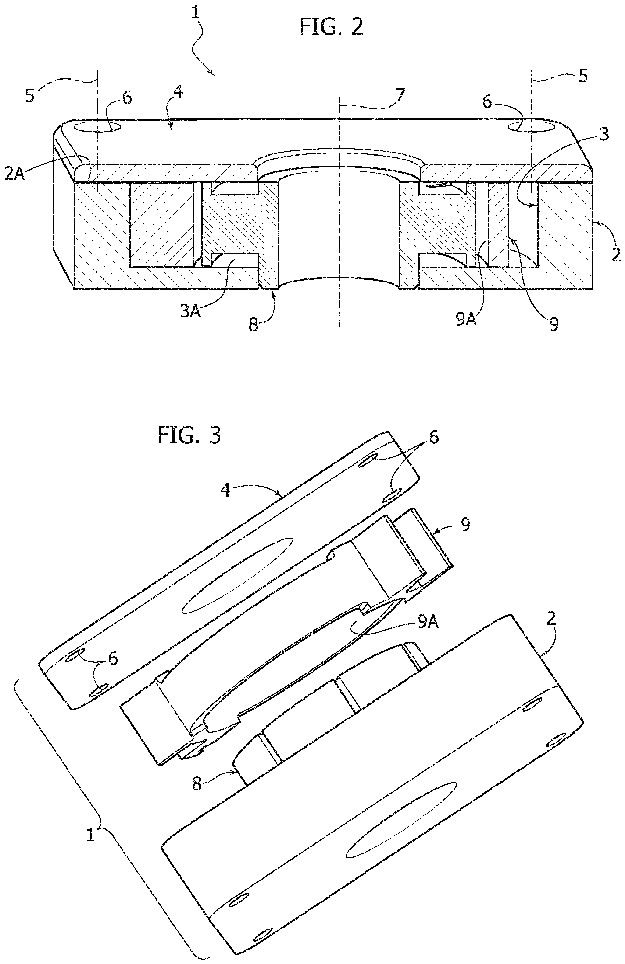

Figures 2, 3 of the annexed drawings show a cross-sectional view and an exploded perspective view of a positive displacement vane pump according to the prior art. In these figures, reference numeral 1 generally designates a positive displacement vane pump comprising a pump body 2 defining a cavity 3 which is opened at its upper side (with reference to the drawings) on one face 2A of the pump body 2; the cavity is closed by a lid 4 secured above the face 2A of the body 2 by means of screws (of which only the axis 5 are shown) which engage holes 6 formed in the lid 4 and the corresponding holes (not visible in the drawings) formed in the face 2A of body 2. Inside cavity 3 there is rotatably mounted around an axis 7 a rotor 8 carrying a series of radially slideable vanes (not visible in figures 2, 3) whose outer ends slide against the inner wall 9A of a control stator ring 9 arranged eccentrically with respect to axis 7 of the rotor 8 inside the cavity 3. According to the conventional art, the eccentricity of the control ring 9, and hence the displacement of the pump, can be adjusted by adjusting the position of ring 9 in the plane orthogonal to axis 7. The details relating to this adjustment are not shown in figures 2, 3 nor are described herein, since they do not fall within the scope of the present invention and can be made in any known way.

With reference to figure 2, in its mounted condition the lid 4 holds the control ring 9 inside cavity 3, against the bottom wall 3 of cavity 3. The manufacturing tolerances which are adopted in the production of the above mentioned components imply that in the mounted condition there is a clearance along an axial direction (i.e. parallel to axis 6) between the body of the control ring 9 and the axial space defined between lid 4 and bottom wall 3A (for example in the order of 0.7 mm).

At the basis of the present invention there are studies which have brought the Applicant to discover that the above mentioned clearance may be a source of a relevant losses of performance for the pump and further gives origin to a disturbing ticketing noise during operation of the engine to which the pump is associated.

**A pump having the features indicated in the preamble of claim 1 is known from** US 2010/296956 A1**. Pumps with these features are also known from** DE 10 2017 004248 A1**,** US 5 090 881 A **and** JP S60 85283 A**.**

### Object of the invention

The object of the present invention is that of providing a pump for the lubricant of an internal combustion engine which is not affected by the above mentioned drawbacks.

A further object of the invention is that of achieving the above indicated goal with simple and inexpensive means and without requiring strict manufacturing tolerances.

A further object of the invention is that of achieving the above mentioned goals without jeopardizing the efficiency and reliability of operation of a pump.

A further object of the invention is that of proposing a solution which can be easily applied to different types and models of pump.

Yet a further object of the invention is that of proposing a solution which is easily applicable also through a simple modification of an already existing pump.

### Summary of the invention

In view of achieving one or more of the above indicated objects, the invention is directed to a pump **having the features of claim 1.**

In one preferred embodiment, the above-mentioned starter ring has a face facing towards the lid in which there are formed a number of cavities which each receives one of said elastic elements. The elastic elements used can be springs, such as helical springs, or bodies of elastomeric material.

As already indicated in the foregoing, a particularly advantageous application of the invention is referred to a positive displacement vane pump, in which the rotor carries a series of radially slideable vanes and the stator ring is in form of a control ring for controlling the displacement of a pump, arranged eccentrically with respect to the rotor and defining a wall against which slide the outer ends of the vanes carried by the rotor, the position of a control ring in plane orthogonal to the rotor axis being adjustable.

Due to the above-mentioned features, the problem of the ticketing noise which is generated during hot operation of the engine to which the pump is associated is totally eliminated, in **an** extremely simple and inexpensive way, and without any impact on the efficiency and reliability of the pump. An important advantage of the invention **lying** in that it is easily applicable to any type of model of pump, also by means of a simple modification on an already existing pump.

### Detailed description of a preferred embodiment

Further features and advantages of the invention will become apparent from the description which follows with reference to the annexed drawings, given purely by way of non-limiting example, in which :
figure 1 is a perspective view from above of an embodiment of the pump according to the invention, with the lid removed in order to show the control ring and the vane rotor of the pump,
figures 2, 3 are a cross-sectional view and a perspective exploded view of a pump according to the prior art,
figure 4 is a cross-sectional perspective view of the pump of figure 1,
figure 5 is an exploded perspective view of the pump shown in figures 1 and 4,
figure 6 is a further perspective view from above of the preferred embodiment of the invention, with the lid removed,
figure 7 is a further exploded perspective view which shows the main components of the pump according to the invention, and
figures 8, 9 are two cross-sectional views which show the principle **of** operation at the basis of the invention.

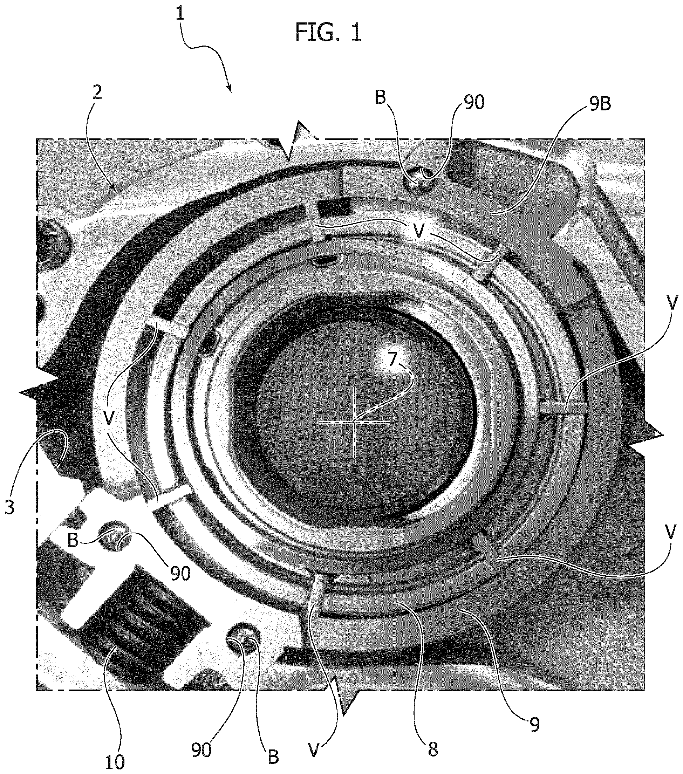

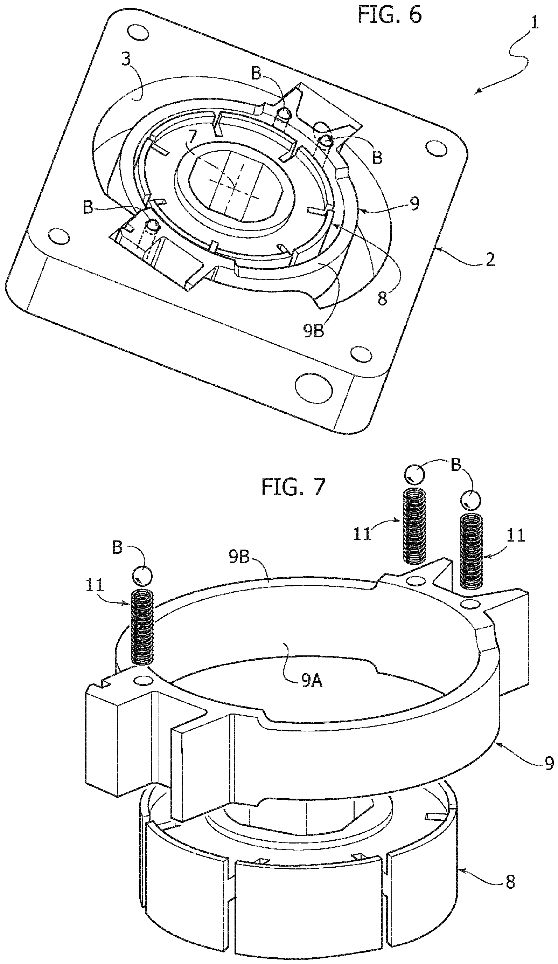

In figures 1 and 4 - 9, parts corresponding to those of figures 2, 3 have been indicated by the same reference numerals.

As indicated in the foregoing, figure 1 shows the pump with the lid removed, in order to show the control ring 9 mounted inside the cavity 3 of the body 2 of the pump, and the rotor 8 rotatably mounted within cavity 3 and carrying the slideable vanes V whose outer ends slides against the inner wall of the control ring 9. Figure 1 also shows a helical spring 10 forming part of the mechanism for adjustment of the position of the control ring 9. As indicated above, the details of construction relating to these adjustment device are not described herein, since this device can be made in any known way and also because it does not fall, taken alone, within the scope of the present invention.

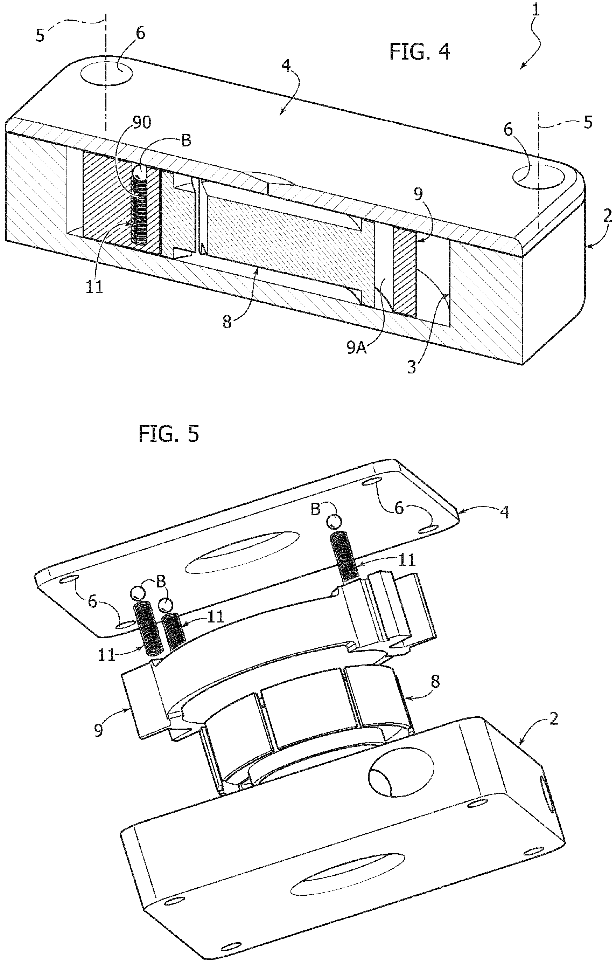

The main difference with respect to the known solution shown in figures 2, 3 lies in that in the case of the example shown in figures 1 and 3 - 9, on the upper face 9B (see figure 1) of the control ring 9 there are formed axial cylindrical cavities 90, parallel to the axis 7 of the rotor, within which there are arranged elastic elements 11 (which in this example are in the form of helical springs). With reference in particular to figure 4, each elastic element 11 has one end in contact with the bottom wall of the respective cavity 90 and the opposite end which in the mounted condition of the lid 4 is pressed by the lid with the interposition of an engagement element B, which in the example is in the form of a spherical body, for example of metal or synthetic material.

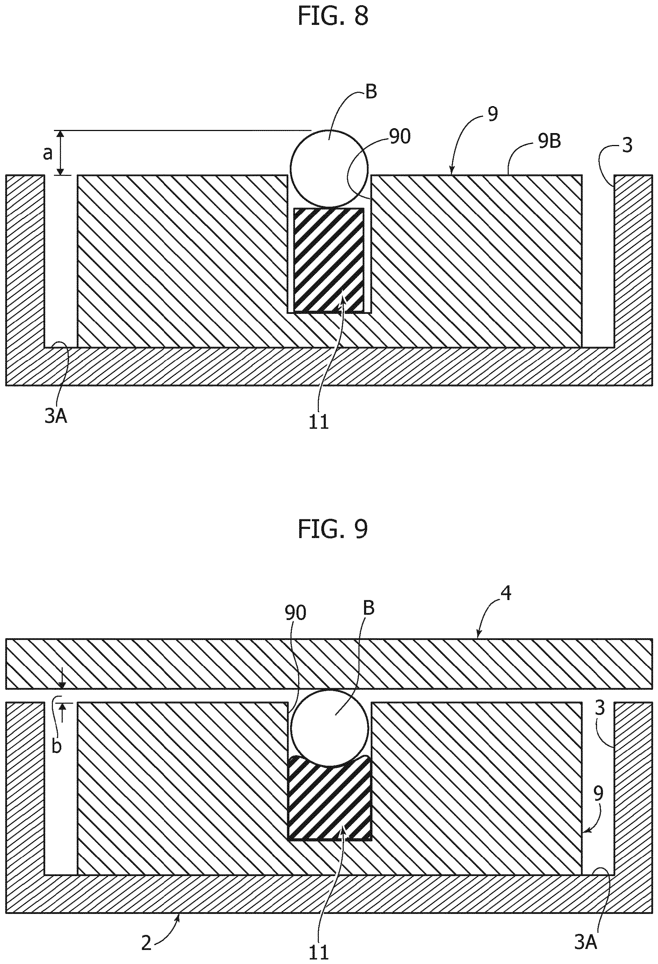

In place of the helical springs 11 it is possible to use any other type of spring or elastic element, such as bodies of elastomeric material, as diagrammatically shown in figures 8, 9.

Figures 8, 9 diagrammatically show the principle on which the present invention is based. In the example shown in these figures, the elastic element 11 is in the form of **a** body of elastomeric material with a substantially cylindrical shape, which is received inside a respective cavity 90 formed in the body of the control ring 9 starting from the upper surface 9B. Figure 8 shows the body 11 in undeformed condition, of maximum length, before that the lid 4 is secured above the body 2 of the pump. In this condition, the spherical body B which rests on the upper end of the elastic body 11 projects above the upper surface 9B by a distance "a". Figure 9 shows the mounted condition of the lid 4, in which the spherical body B still projects above the upper surface 9B of the ring 9, but through a distance "b" which is lower than "a".

Due to the above described arrangement, in the mounted condition of the **lid** 4, the body of the control ring 9 is pressed against the bottom wall 3A of the cavity 3 with an elastic load, i.e. a load which is a function of the deformation imparted to the elastic elements 11.

For each specific application, the elastic elements 11 can be configured (in the form of springs or in the form of bodies of elastomeric material) so as to generate, in the mounted condition of the lid 4, an elastic load sufficient for preventing, during operation of the engine to which the pump is associated, axial movements of the control ring 9, i.e. movements along a direction parallel to the axis 7, 8, and rotations of the control ring 9 around a geometrical axis, i.e. around an axis orthogonal to axis 7 of the rotor.

In this manner, it is possible to eliminate completely the ticketing noise to which a pump of this type may be subjected to during operation of the engine, without jeopardizing the operational reliability of the pump.

As indicated in the foregoing, the configuration of the elastic elements may widely vary, as a function of each specific application. Also the manner in which these elastic elements are interposed between the body of the control ring 9 and the lid 4 can be varied at will with respect to the illustrated example.

For example, in the case of a positive displacement gear pump of the Gerotor type, in which a possible origin of noise and loss of the efficiency is represented by an axial movement and/or a rotation around a diametrical axis of the two rotors of the pump, the elastic elements and the contact spherical bodies can be housed within the body of the pump or within the lid.

Reverting to the embodiment shown herein, also the provision of elements B interposed between the elastic elements 11 and the lid 4 is absolutely optional. For example, the spherical body B can be integrated within a body of elastomeric material constituting the respective elastic element.

More in general, the embodiments and the details of construction may widely vary with respect to what has been described and shown purely by way of example, without departing from the scope of the present invention, as defined in the annexed **claims**.

## Claims

1. A lubricant pump of an internal combustion engine, comprising:
- a pump body (2) defining a cavity (3) opening on one face (2A) of the pump body (2),
- a lid (4) secured to said face (2A) of the pump body (2), for closing said cavity (3),
- a rotor (8) rotatably mounted within the cavity (3) of the pump body (2), and
- a stator ring (9) surrounding the rotor (8) which is positioned within said cavity (3) against a bottom wall (3A) of said cavity (3) and which is held in this position by said lid (4), wherein between said lid (4) and said stator ring (9) there are interposed one or more elastic elements (11) which are compression loaded as a result of the mounting of said lid (4) to the pump body (2),
said pump being **characterised in that** the elastic elements (11) are configured so that, in the mounted condition of the lid (4), they press the stator ring (9) against the bottom wall (3) of said cavity (3) with an elastic load sufficient for preventing axial movements, as well as a rotation around a diametrical axis, of said stator ring (9) during operation of the pump, thereby eliminating any ticketing noise of the pump during operation of the engine, and
**in that** between each elastic element (11) and the lid (4) there is interposed a spherical body (B) of metal or synthetic material.

2. Pump according to claim 1 **characterized in that** said stator ring (9) has one face (9B) facing towards said lid (4) in which there are formed cavities (90) each of which receives one of said elastic elements (11).

3. Pump according to claim 2, **characterized in that** said elastic elements (11) are in the form of springs.

4. Pump according to claim 3, **characterised in that** said elastic elements (11) are in the form of helical springs.

5. Pump according to claim 2, **characterised in that** said elastic elements are bodies of elastomeric material (11) with a substantially cylindrical shape.

6. Pump according to claim 1, **characterised in that** it is a positive displacement vane pump, in which said rotor (8) carries a series of radially slidable vanes (V) and said stator ring (9) constitutes a control ring arranged eccentrically with respect to the rotor (8) and defining a wall (9A), against which slide the outer ends of the vanes (V) carried by the rotor (8), the position of said control ring (9) in a plane orthogonal to the axis of the rotor (8) being adjustable.

7. Pump according to claim 1, **characterised in that** said lid (4) is secured to said pump body (2) by means of screws.

## Patentansprüche

1. Schmiermittelpumpe eines Verbrennungsmotors, umfassend:
- einen Pumpenkörper (2), der einen Hohlraum (3) definiert, der auf einer Seitenfläche (2A) des Pumpenkörpers (2) offen ist,
- einen Deckel (4), der an der Seitenfläche (2A) des Pumpenkörpers (2) befestigt ist, zum Verschließen des Hohlraums (3),
- einen Rotor (8), der innerhalb des Hohlraums (3) des Pumpenkörpers (2) drehbar gelagert ist, und
- einen den Rotor (8) umgebenden Statorring (9), der innerhalb des Hohlraums (3) gegen eine Bodenwand (3A) des Hohlraums (3) positioniert ist und der durch den Deckel (4) in dieser Position gehalten wird, wobei zwischen den Deckel (4) und den Statorring (9) ein oder mehrere elastische Elemente (11) eingefügt sind, die infolge der Befestigung des Deckels (4) an dem Pumpenkörper (2) druckbelastet sind,
wobei die Pumpe **dadurch gekennzeichnet ist, dass** die elastischen Elemente (11) derart gestaltet sind, dass sie im befestigten Zustand des Deckels (4) den Statorring (9) mit einer elastischen Last, die ausreicht, um axiale Bewegungen sowie eine Drehung um eine diametrale Achse des Statorrings (9) während des Betriebs der Pumpe zu verhindern, gegen die Bodenwand (3_{[A1]}) des Hohlraums (3) pressen und dadurch jegliches tickende Geräusch der Pumpe während des Betriebs des Motors beseitigen, und
dadurch, dass zwischen jedes elastische Element (11) und den Deckel (4) ein sphärischer Körper (B) aus Metall oder Kunststoff eingefügt ist.

2. Pumpe nach Anspruch 1, **dadurch gekennzeichnet, dass** der Statorring (9) eine dem Deckel (4) zugewandte Seitenfläche (9B) aufweist, in der Hohlräume (90) ausgebildet sind, von denen jeder eines der elastischen Elemente (11) aufnimmt.

3. Pumpe nach Anspruch 2, **dadurch gekennzeichnet, dass** die elastischen Elemente (11) als Federn ausgebildet sind.

4. Pumpe nach Anspruch 3, **dadurch gekennzeichnet, dass** die elastischen Elemente (11) als Schraubenfedern ausgebildet sind.

5. Pumpe nach Anspruch 2, **dadurch gekennzeichnet, dass** die elastischen Elemente Körper aus Elastomerwerkstoff (11) mit einer im Wesentlichen zylindrischen Form sind.

6. Pumpe nach Anspruch 1, **dadurch gekennzeichnet, dass** sie eine Flügelzellenverdrängerpumpe ist, bei der der Rotor (8) eine Reihe von radial verschiebbaren Flügeln (V) trägt und der Statorring (9) einen Steuerring bildet, der exzentrisch zum Rotor (8) angeordnet ist und eine Wand (9A) definiert, gegen die die äußeren Enden der vom Rotor (8) getragenen Flügel (V) gleiten, wobei die Position des Steuerrings (9) in einer zur Achse des Rotors (8) orthogonalen Ebene einstellbar ist.

7. Pumpe nach Anspruch 1, **dadurch gekennzeichnet, dass** der Deckel (4) an dem Pumpenkörper (2) mithilfe von Schrauben befestigt ist.

## Revendications

1. Pompe à lubrifiant d'un moteur à combustion interne, comprenant :
- un corps de pompe (2) définissant une cavité (3) débouchant sur une face (2A) du corps de pompe (2),
- un couvercle (4) fixé à ladite face (2A) du corps de pompe (2), pour fermer ladite cavité (3),
- un rotor (8) monté en rotation à l'intérieur de la cavité (3) du corps de pompe (2), et
- un anneau de stator (9) entourant le rotor (8) qui est positionné à l'intérieur de ladite cavité (3) contre une paroi inférieure (3A) de ladite cavité (3) et qui est maintenu dans cette position par ledit couvercle (4), dans laquelle entre ledit couvercle (4) et ledit anneau de stator (9) sont interposés un ou plusieurs élément(s) élastique(s) (11) qui est/sont chargé(s) en compression suite au montage dudit couvercle (4) sur le corps de pompe (2),
ladite pompe étant **caractérisée en ce que** les éléments élastiques (11) sont configurés de sorte que, à l'état monté du couvercle (4), ils pressent l'anneau de stator (9) contre la paroi inférieure (3) de ladite cavité (3) avec une charge élastique suffisante pour empêcher les mouvements axiaux, ainsi qu'une rotation autour d'un axe diamétral, dudit anneau de stator (9) pendant le fonctionnement de la pompe, éliminant ainsi tout bruit de tic-tac de la pompe pendant le fonctionnement du moteur, et
**en ce qu'**entre chaque élément élastique (11) et le couvercle (4) est interposé un corps sphérique (B) en métal ou en matière synthétique.

2. Pompe selon la revendication 1, **caractérisée en ce que** ledit anneau de stator (9) présente une face (9B) tournée vers ledit couvercle (4) dans laquelle sont formées des cavités (90) dont chacune reçoit un desdits éléments élastiques (11).

3. Pompe selon la revendication 2, **caractérisée en ce que** lesdits éléments élastiques (11) se présentent sous la forme de ressorts.

4. Pompe selon la revendication 3, **caractérisée en ce que** lesdits éléments élastiques (11) se présentent sous la forme de ressorts hélicoïdaux.

5. Pompe selon la revendication 2, **caractérisée en ce que** lesdits éléments élastiques sont des corps en matériau élastomère (11) ayant une forme sensiblement cylindrique.

6. Pompe selon la revendication 1, **caractérisée en ce qu'**il s'agit d'une pompe volumétrique à palettes, dans laquelle ledit rotor (8) porte une série de palettes (V) pouvant coulisser radialement et ledit anneau de stator (9) constitue un anneau de commande agencé de manière excentrée par rapport au rotor (8) et définissant une paroi (9A), contre laquelle coulissent les extrémités extérieures des palettes (V) portées par le rotor (8), la position dudit anneau de commande (9) dans un plan orthogonal à l'axe du rotor (8) étant réglable.

7. Pompe selon la revendication 1, **caractérisée en ce que** ledit couvercle (4) est fixé audit corps de pompe (2) au moyen de vis.
